# EUROPÄISCHE PATENTANMELDUNG

(11) **EP 0 646 547 A2**
(43) Veröffentlichungstag der Anmeldung: **05.04.1995**
(21) Anmeldenummer: 94115322.3
(22) Anmeldetag: 29.09.1994
(51) Int. Cl.: C02F 1/02, C02F 3/28, C02F 11/18

(54) **Verfahren zur Behandlung von biogenen Restmassen**

(30) Priorität: 01.10.1993 DE 4333468
(71) Anmelder: Thyssen Still Otto Anlagentechnik GmbH, D-44789 Bochum (DE)
(72) Erfinder: Tippmer, Kurt, D-45665 Recklinghausen (DE)
(74) Vertreter: Dahlkamp, Heinrich-Leo

(57) **Zusammenfassung**

Die Erfindung bezieht sich auf ein Verfahren zur Behandlung von biogenen Restmassen, insbesondere von bei der biologischen Abwasserreinigung anfallenden Klärschlämmen, Gülle, sonstigen mikrobiologischen und nachwachsenden Biomassen sowie von biogenen Restmüllfraktionen.

Erfindungsgemäß wird vorgeschlagen, daß die biogenen Massen sowohl einer temperaturaktivierten Flüssigphasenhydrolyse als auch einer anaeroben Fermentation unterzogen werden, wobei im wesentlichen ein Hydrolysat mit den wasserlöslichen Spaltprodukten, ein zur Verbrennung nutzbares Gas, eine weitgehend von organischen Anteilen und Schadstoffen befreite verwertbare oder deponierfähige Restmasse und eine separate Schwermetallfraktion anfallen.

## Beschreibung

Die Erfindung bezieht sich auf ein Verfahren gemäß Oberbegriff der Ansprüche 1 oder 2.

Aus der DE 39 28 815 ist ein Verfahren zur Behandlung von Biomassen, z. B. bei der biologischen Abwasserreinigung anfallenden Klärschlämmen, Gülle, sonstigen mikrobiologischen und nachwachsenden Biomassen, bekannt, bei dem die Biomasse, gegebenenfalls nach einer Vorbehandlung, in einer Temperatur-Druck-Hydrolyse (TDH) in der Flüssigphase bei 150 °C bis 300 °C behandelt wird und eine Restmasse als Feststoffphase und eine mit organischen monomeren Wertstoffen angereicherte Flüssigphase anfällt. Eine von Schadstoffen, wie z. B. Schwermetallen, weitgehend befreite Restmasse soll danach als Dünger oder als Bodenverbesserer benutzt werden. Zur Weiterverarbeitung des anfallenden Hydrolysates ist aber eine nach dem Prinzip der fraktionierenden Umkehrosmose arbeitende Verfahrensstufe zur Trennung in eine anorganische und eine organische wäßrige Fraktion vorgesehen.

Es hat sich gezeigt, daß bei einem derartigen Verfahren der Hydrolysegrad nicht ausreichend ist, die Restmassen einen Glühverlust von > 5 Gew% haben, relativ wenig verwertbares Gas gewonnen wird und die Aufarbeitung des anfallenden Hydrolysates noch einer Verbesserung zwecks Rückführung in eine anaerobe Fermentation bedarf.

In einer Veröffentlichung von J. Pinnekamp mit dem Titel: "Auswirkungen einer thermischen Vorbehandlung von Klärschlamm auf die anaerobe Stabilisierung" in: Korrespondenz Abwasser 1987, Heft 8, Seite 856 bis 863, wurde insbesondere die thermische Vorbehandlung bei Temperaturen im Bereich von 120 bis 220 °C und bei einem maximalen Betriebsdruck von etwa 28 bar in Hinblick auf den Wärmeüberschuß und eine Nutzung des Faulgases zur Stromerzeugung untersucht. Über die Behandlung und Entsorgung der anfallenden Restmassen ist dabei nichts gesagt.

Die Erfindung bezieht sich außerdem auf eine Behandlung von biogenen Restmüllfraktionen. Dieser Restmüll muß trotz aller Vermeidungs- und Verwertungsbemühungen mit erheblichem Aufwand entsorgt, d. h. behandelt und abgelagert, werden. Neben einer thermischen Pyrolyse und einer aufwendigen Verbrennung werden neuerdings auch die Kompostier- und/oder die anaerobe Behandlung von biogenen Restmüllfraktionen als Alternative gesehen (vgl. Aufsatz D. Schlag et al "Betriebsanlagen zur Vergärung von Abfällen" in 'Müll und Abfall' 7/93, S. 516 - 524 und 8/93, S. 599 - 609).

Auch diese Verfahren haben ihre Akzeptanzgrenzen, wenn der eingesetzte Restmüll mit Schwermetallen oder anderen schwer biologisch abbaubaren Substanzen kontaminiert ist, so daß eine Verwertung der verrotteten Restmasse nicht möglich ist. Andererseits ist wegen des noch hohen organischen Anteiles eine Deponierung aufgrund der Grenzen des neuen Siedlungs-Abfallgesetzes nicht möglich.

Der Erfindung liegt daher die Aufgabe zugrunde, ein Verfahren zur Behandlung der eingangs genannten Stoffe vorzuschlagen, bei dem die genannten Probleme nicht bestehen und insbesondere möglichst hohe Mengen verwertbaren Gases gewonnen werden.

Zwei alternative Lösungen dieser Aufgabe sind im Kennzeichen der Ansprüche 1 und 2 angegeben. Die Unteransprüche 3 bis 9 enthalten sinnvolle ergänzende Vorschläge.

Es hat sich gezeigt, daß die vorgenannte Kombination des Verfahrens der Flüssigphasenhydrolyse mit einer anaeroben Fermentation die Möglichkeit bietet, die anfallende biogene Masse auf einfache Art und Weise aufzuarbeiten und zu verwerten, wobei insbesondere größere Mengen an verwertbarem Gas gewonnen werden. Darüber hinaus fällt eine relativ kleine Menge an weitgehend von organischen Anteilen und Schadstoffen befreiter verwertbarer oder deponierfähiger Restmasse an. Schließlich kann ebenfalls eine separate Schwermetallfraktion entsprechend entsorgt werden.

Wie aus den weiteren Unteransprüchen ersichtlich ist, besteht einerseits die Möglichkeit, anfallenden Klärschlamm in an sich bekannten Faultürmen unter Biogaserzeugung einer anaeroben Fermentation zu unterziehen und den anfallenden Faulschlamm anschließend in einer Flüssigphasenhydrolyse weiterzubehandeln, wobei nach Abzug von Hydrolysegas, deponierfähiger Restmasse und einer ausgefällten Schwermetallfraktion das verbleibende Hydrolysat zur anaeroben Faulung zurückgeführt wird (vgl. Anspruch 5).

Andererseits ist es aber auch möglich, eine vorliegende biogene Restmüllfraktion nach einer bestimmten Vorbehandlung als Suspension einer temperaturaktivierten Flüssigphasenhydrolyse aufzugeben und das anfallende Hydrolysat nach Abtrennung von Problemstoffen und von nicht organischen Restmassen einer anaeroben Fermentation zuzuführen (vgl. Anspruch 2).

Es kann aber auch die anfallende Biomasse, insbesondere der Klärschlamm, zunächst einer TDH unterzogen werden und anschließend das anfallende Hydrolysat nach Abtrennung von der organischen Restmasse und den Problemstoffen einer anaeroben Fermentation zugeführt werden, wobei ein eventueller Überschuß an mikrobiologischer Masse zur TDH zurückgeführt werden kann.

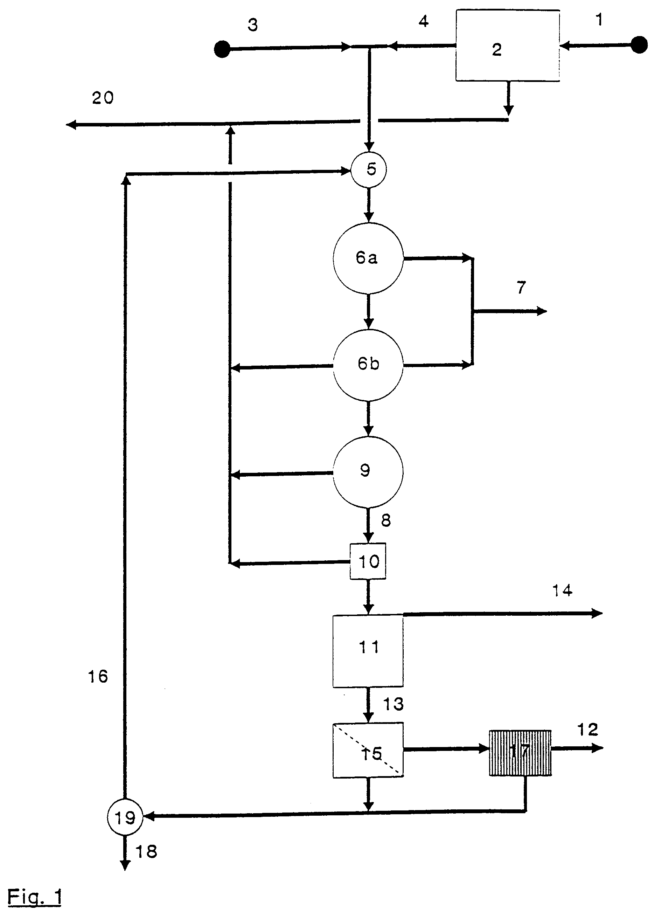

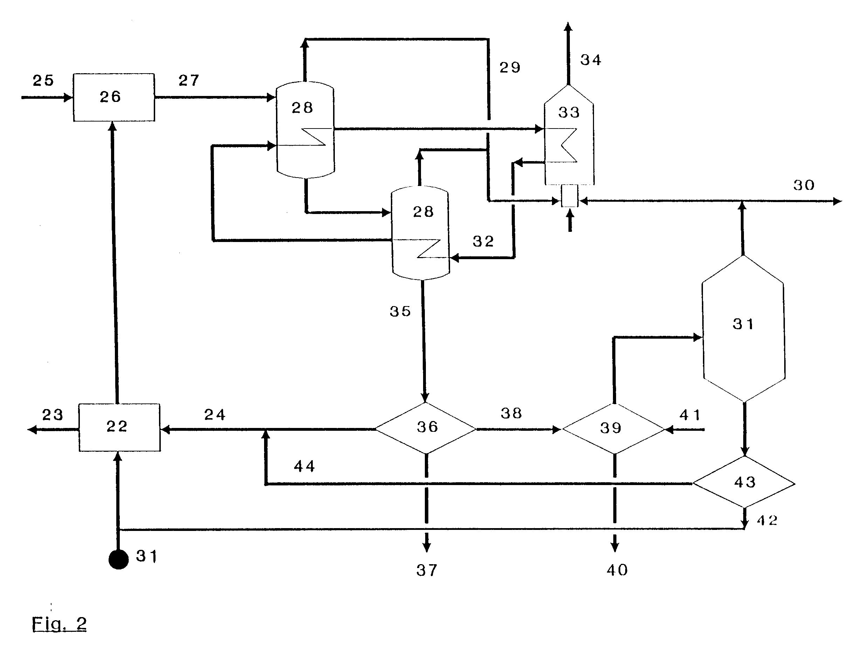

Die Erfindung wird anhand der beigefügten Figuren 1 und 2 beispielsweise näher erläutert.
- Figur 1: zeigt schematisch die Aufarbeitung von Klärschlamm.
- Figur 2: zeigt schematisch die Verwertung des biogenen Anteiles einer Restmüllfraktion.

### Beschreibung zu Figur 1

In der Regel wird der Überschußschlamm (1) der aeroben biologischen Abwasserreinigung mittels einer Siebbandpresse (2) o. ä. unter Abzug von Restwasser von 2 auf > 6 Gew% Trockensubstanz (TS) entwässert und mit dem Überschußwasser der Faulung (Faulwasser) als Trübwasser (20) in die aerobe Abwasserbehandlung zurückgeführt. Der in der mechanischen Vorklärung anfallende Vorklärschlamm (3) wird mit dem vorentwässerten Belebtschlamm (4) und dem rückgeführten Hydrolysat (16) in dem Behälter (5) zu einem Klärschlamm zusammengemischt, so daß sich ein Schlamm mit einem TS-Gehalt von ca. 5 Gew% einstellt. Der Klärschlamm wird anschließend in einer zweistufigen Faulung (6a, 6b) anaerob behandelt, wobei ein Teil der mikrobiologischen Masse zu Biogas (7) abgebaut wird. Der Rest wird als Faulschlamm (8) den Faultürmen entnommen, entwässert und, falls keine Kontamination vorliegt, heute teilweise noch als Bodenverbesserer genutzt.

Immer häufiger sind die Schlämme jedoch mit Schwermetallen und anderen Problemstoffen belastet, so daß dieser Weg der Verwertung nicht mehr möglich ist. Die heiße thermische Behandlung von belasteten Schlämmen bringt bekannterweise neue Probleme durch die sekundären Ströme Restmasse und Abgas.

Die neue Verfahrensidee hat diese Probleme nicht, da sie
1. ein geschlossenes Flüssigphasensystem darstellt und
2. in ein vorhandenes Abwasserreinigungssystem integriert wird.

Der Faulschlamm (8) wird einem Schlammspeicher (9) entnommen und hat sich durch Sedimentationseffekte auf > 7 Gew% aufkonzentriert. Eine weitere Vorentwässerung (10) auf bis 100 g TS/l Wasser erfolgt nach einer Vorwärmung auf bis 80 °C in einem Zentrifugendekanter. Die hydrolytische Umwandlung des biogenen Anteiles des Faulschlammes erfolgt durch eine temperaturaktivierte Flüssigphasenhydrolyse (11) in einem indirekt beheizten Rohr- oder Kaskaden-Rührwerksreaktor bei Temperaturen von 300 bis 320 °C und Verweilzeiten von 1,5 bis 2,5 Stunden. Bei diesen Prozeßparametern wird ein Hydrolysegrad von > 97 % erreicht, so daß die Restmasse (12) weniger als 5 Gew% Glühverlust (815 °C) hat. Der Abbau der Biopolymere erfolgt bis zu Komponenten < C₄, in der Regel C₂, die im Rohhydrolysat (13) gelöst sind.

Bei der Hydrolyse wird durch Decarboxilierung CO₂ und durch Desaminierung der Aminosäure NH₃ frei, die mit geringen Anteilen von H₂, CO und N₂ sowie kurzkettigen wasserdampfflüchtigen Carbonsäuren als Hydrolysegas (14) abgetrennt und verbrannt werden. Das entgaste Rohhydrolysat (13) wird mit einem Mikrofilter (15) in die Restmasse (12) und das Hydrolysat (16) aufgetrennt.

Das Hydrolysat wird in den anaeroben Faulungsprozeß recycelt und der biogene Anteil zu zusätzlichem Biogas (> + 40 %) umgewandelt. Die Restmasse wird in einer Filterpresse (17) entwässert und verwertet. Falls der Einsatzschlamm durch Schwermetalle kontaminiert ist, werden diese bei den Hydrolysebedingungen in eine wasserlösliche Form überführt und so von der Restmasse getrennt. Mittels einer Fällungsstufe (17) können diese dann aus dem Hydrolysat abgetrennt und als eine separate Schwermetallfraktion (18) entsorgt werden.

Eine sinnvolle Alternative zur Verwertung des bei der Desaminierung anfallenden NH₃ ist die Möglichkeit, dieses aus dem Hydrolysegas (14) zu entfernen und als Ammoniumsalz in der Restmasse (12) zu binden, so daß diese als N-P-Dünger in der Landwirtschaft verwertet werden kann.

### Beschreibung zu Figur 2

Die Probleme der kontaminierten, biogenen Schlämme zeigen sich heutzutage immer häufiger auch bei Restmüllfraktionen, die bisher über eine Verrottung oder eine Kombination aus Vergärung und Verrottung zu einem Kompost aufbereitet werden, so daß eine Verwertung nicht mehr möglich ist. In diesem Falle bietet die Flüssigphasenhydrolyse eine Alternative, bei der die Kontaminate zerstört oder in eine lösliche Form umgewandelt und aus dem Hydrolysat ausgefällt werden.

Die Restmüllfraktion (21) wird in einem Aufbereitungssystem (22) vorbehandelt, wobei eine Grobfraktion (23) abgetrennt und die Restfraktion in eine Umlauflösung (24) suspendiert wird. Durch die Zugabe von Additiv (25) in die Druck-Eintragsstufe (26) wird die Eduktsuspension (27) in die Hydrolysereaktorkaskade (28) eingebracht. Bei Temperaturen > 250 °C und Verweilzeiten > 3 Stunden werden die biogenen Anteile hydrolytisch in der Flüssigphase abgebaut und als Monomere gelöst. Das anfallende Hydrolysegas (29) wird aus dem Reaktorsystem abgezogen und gemeinsam mit einem Teil des Biogases (30) des Bioreaktors (31) zur Erwärmung des Thermalöles (32) verbrannt. Die Verbrennung im Thermalölerhitzer (33) wird so geführt, daß das Rauchgas (34) den Regeln der TA-Luft genügt. Das Rohhydrolysat (35) wird in einer Separationsstufe (36) in die Phasen Umlauflösung (24), dekontaminierte Restmasse (37) und Hydrolysat (38) aufgetrennt.

Aus dem Hydrolysat kann in der Schadstoffabtrennung (39) durch Zugabe eines Additives (41) eine Schadstofffraktion (40), z. B. Schwermetalle, ausgefällt werden.

In dem Bioreaktor (31) werden die biogenen Anteile des gereinigten Hydrolysates durch eine anaerobe Fermentation zu Biogas umgewandelt. Die bei diesem biotechnologischen Prozeß anfallende Überschußbiomasse (42) wird in einem Membranseparator (43) aus der Restlösung (44) abgetrennt, die in die Umlauflösung (24) recycelt wird, so daß kein Abwasserstrom entsteht.

### Bezugszeichenliste

- (1): Überschußschlamm
- (2): Siebbandpresse
- (3): Vorklärschlamm
- (4): vorentwässerter Belebtschlamm
- (5): Behälter
- (6a, 6b): Faultürme zur anaeroben Behandlung
- (7): Biogas
- (8): Faulschlamm
- (9): Schlammspeicher
- (10): Vorentwässerung
- (11): temperaturaktivierte Flüssigphasenhydrolyse TDH
- (12): Restmasse
- (13): Rohyhdrolysat
- (14): Hydrolysegas
- (15): Mikrofilter
- (16): Hydrolysat
- (17): Filterpresse
- (18): Schwermetallfraktion
- (19): Schwermetallfällung
- (20): Trübwasser
- (21): Restmüllfraktion
- (22): Aufbereitungssystem
- (23): Grobfraktion
- (24): Umlauflösung
- (25): Additiv
- (26): Druck-Eintragsstufe
- (27): Eduktsuspension
- (28): Hydrolysereaktorkaskade
- (29): Hydrolysegas
- (30): Biogas
- (31): Bioreaktor
- (32): Thermalöl
- (33): Thermalölerhitzer
- (34): Rauchgas
- (35): Rohhydrolysat
- (36): Separationsstufe
- (37): Restmasse
- (38): Hydrolysat
- (39): Schadstoffabtrennung
- (40): Schadstofffraktion
- (41): Additiv
- (42): Überschußbiomasse
- (43): Membranseparator
- (44): Restlösung

## Patentansprüche

1. Verfahren zur Behandlung von biogenen Restmassen, insbesondere von bei der biologischen Abwasserreinigung anfallenden Klärschlämmen, Gülle, sonstigen mikrobiologischen und nachwachsenden Biomassen sowie von biogenen Restmüllfraktionen, **dadurch gekennzeichnet,** daß die biogene Masse, vorzugsweise ein Klärschlamm, zunächst einer anaeroben Faulung und Gewinnung von Biogas unterzogen wird und anschließend der Faulschlamm einer TDH unterzogen wird und nach Abzug von Hydrolysegas, deponierfähiger Restmasse und einer ausgefällten Schwermetallfraktion das verbleibende Hydrolysat zur anaeroben Faulung zurückgeführt wird.

2. Verfahren zur Behandlung von biogenen Restmassen, insbesondere von bei der biologischen Abwasserreinigung anfallenden Klärschämmen, Gülle, sonstigen mikrobiologischen und nachwachsenden Biomassen sowie von biogenen Restmüllfraktionen, **dadurch gekennzeichnet,** daß die biogene Restmasse, vorzugsweise die biogene Restmüllfraktion, nach einer gegebenenfalls mechanischen Vorbehandlung als Suspension einer TDH zugeleitet wird und das anfallende Hydrolysat nach Abtrennung von Problemstoffen, vorzugsweise Schwermetallen, und von nicht organischen Restmassen einer anaeroben Fermentation zugeführt wird.

3. Verfahren nach Anspruch 1 oder 2, **dadurch gekennzeichnet,** daß ein Teil des anfallenden Hydrolysates gemeinsam mit einer aus der anaeroben Fermentation abgezogenen Flüssigfraktion zur TDH zurückgeführt wird.

4. Verfahren nach Anspruch 1, 2 oder 3, **dadurch gekennzeichnet,** daß die vorentwässerte mikrobiologische Masse bei Temperaturen von 280 bis 325 °C und Verweilzeiten von 1,5 bis 3,0 Stunden hydrolytisch gespalten wird, und aus dem bei der TDH anfallenden Hydrolysat eine Restmasse mit einem Glühverlust von < 5 % abgezogen wird.

5. Verfahren nach Anspruch 1, **dadurch gekennzeichnet,** daß der TDH ein Faulschlamm mit einer Trockensubstanzkonzentration von 50 bis 70 g/l zugeführt wird.

6. Verfahren nach mindestens einem der vorhergehenden Ansprüche, **dadurch gekennzeichnet,** daß das bei der TDH anfallende Hydrolysegas und/oder ein Teil des bei der anaeroben Fermentation anfallende Biogases als Brenngas für die Erhitzung des Umlaufthermalöles der TDH genutzt wird.

7. Verfahren nach mindestens einem der vorhergehenden Ansprüche, **dadurch gekennzeichnet,** daß die anfallende Biomasse zunächst einer TDH unterzogen und das anfallende Hydrolysat, befreit von der anorganischen Restmasse und Problemstoffen wie Schwermetallen, einer anaeroben Fermentation zugeführt wird.

8. Verfahren nach mindestens einem der vorhergehenden Ansprüche, **dadurch gekennzeichnet,** daß der bei der anaeroben Fermentation entstehende Überschuß an mikrobiologischer Masse in der TDH ebenfalls hydrolytisch gespalten wird.

9. Verfahren nach mindestens einem der vorhergehenden Ansprüche, **dadurch gekennzeichnet,** daß das bei der TDH durch Desaminierung frei werdende NH₃ aus dem Hydrolysegas mittels der angesäuerten Restmasse absorbiert wird und als Ammoniumdüngesalz gemeinsam mit dem Phosphoranteil genutzt wird.
